Europäisches Patentamt

**European Patent Office**

Office européen des brevets

(11) Veröffentlichungsnummer: **0 038 411**
**B1**

(12) **EUROPÄISCHE PATENTSCHRIFT**

(45) Veröffentlichungstag der Patentschrift:
14.11.84

(21) Anmeldenummer: 81101369.7

(22) Anmeldetag: **25.02.81**

(51) Int. Cl.³: **G 09 G 1/16**, G 06 F 13/00

(54) Einrichtung zur Speicherung und Darstellung graphischer Information.

(30) Priorität: **19.04.80 DE 3015125**

(43) Veröffentlichungstag der Anmeldung:
**28.10.81 Patentblatt 81/43**

(45) Bekanntmachung des Hinweises auf die Patenterteilung:
**14.11.84 Patentblatt 84/46**

(84) Benannte Vertragsstaaten:
**DE FR GB IT**

(56) Entgegenhaltungen:
**FR - A - 2 274 112
US - A - 4 090 260**

**IEEE TRANSACTIONS ON COMPUTERS, Band C-17,
Heft 8, August 1968, NEW YORK (US), D.J. KUCK: "Illiac
IV Software and Application Programming", Seiten
758-770
IBM TECHNICAL DISCLOSURE BULLETIN, Band 19,
Heft 2, Juli 1976, NEW YORK (US), L.E. OVERHOUSE:
"On-the-fly Rearrangement of Area Formatted Data for
Display Refresh", Seiten 683-684**

(73) Patentinhaber: **International Business Machines
Corporation, Old Orchard Road, Armonk, N.Y. 10504 (US)**

(72) Erfinder: **Schütt, Dieter, Dr., Fallmerayerstrasse 17,
D-8000 München 40 (DE)**
Erfinder: **Schwengler, Manfred, Dr., Breslauer Strasse 9,
D-7032 Sindelfingen (DE)**
Erfinder: **Ulland, Hartmut, Helaustrasse 26,
D-7000 Stuttgart (DE)**
Erfinder: **Weis, Helmut, Königsberger Strasse 12,
D-7035 Waldenbuch (DE)**

(74) Vertreter: **Teufel, Fritz, Dipl.-Phys., Schönaicher
Strasse 220, D-7030 Böblingen (DE)**

## Beschreibung

Die Erfindung betrifft eine Einrichtung zur Speicherung und Darstellung graphischer Information nach dem Oberbegriff von Anspruch 1.

Die Darstellung und Verarbeitung von Information in Form graphischer Daten, z.B. Diagramme, Kurven, Zeichnungen usw. gewinnt immer mehr an Bedeutung; der Grund hierfür liegt einerseits in dem Bestreben, den Umgang mit informationsverarbeitenden Anlagen einfacher zu gestalten und zum anderen in der Verfügbarkeit entsprechender relativ preiswerter Geräte. Die möglichen Anwendungsgebiete werden aber immer noch durch die sehr grossen Speicherkapazitäten beschränkt, die zur Speicherung graphischer Bilder unerlässlich sind.

Eine graphische Darstellung kann als matrixförmige Anordnung von Zahlenwerten dargestellt werden, die jeweils einem Punkt eines Bildfeldes (z.B. Bildschirm) entsprechen und einen bestimmten Grauwert oder eine bestimmte Farbe darstellen. Im folgenden sollen der Einfachheit halber nur sog. digitale Bilder betrachtet werden, die ausschliesslich aus den «Farben» schwarz und weiss bestehen und durch die Binärziffern Null und Eins dargestellt werden. Eine typische Darstellung, beispielsweise auf dem Bildschirm eines Datensichtgeräts, enthält $1024 \times 1024$ derartiger Schwarz-weiss-Bildelemente und benötigt zur Speicherung einen Digitalspeicher mit einer Kapazität von einem Megabit.

Dieser Speicher muss trotz seiner grossen Kapazität eine kurze Zugriffszeit aufweisen: Einmal verlangt die Manipulation graphischer Daten, z.B. eine Bilddrehung oder eine Änderung des Bildmassstabs, eine grosse Zahl von Speicherzugriffen und zum anderen müssen beim Einsatz von sog. Raster-Anzeigegeräten die einzelnen Speicherzeilen periodisch zur Auffrischung des Bildschirms ausgelesen werden.

Eine weitere einschränkende Bedingung für den Speicherzugriff besteht in der geforderten Möglichkeit, Geräte mit verschiedenen Charakteristiken anschliessen zu können. Die digitale Bildinformation kann beispielsweise durch Abtastung einer Vorlage, wie z.B. eines geschriebenen Dokuments, erzeugt werden; in diesem Fall muss der Speicher ähnlich wie bei der Auffrischung des Bildschirms zeilenweise sequentiell adressiert werden. Dasselbe gilt für den Fall, dass ein Rechner Zugriff zu diesem Speicher verlangt. Statt durch Abtastung kann eine graphische Darstellung aber auch in sog. Vektorgeneratoren erzeugt werden, die einzelne Elemente von Figuren, z.B. Geraden, Kreise usw. punktweise erzeugen und mit den entsprechenden Punktadressen diese Muster Bit für Bit im Speicher aufbauen. Die Geschwindigkeit der Bilderzeugung ist dabei sehr hoch und stellt an die Zugriffsrate des Speichers sehr hohe Anforderungen.

Aus Kostengründen ist man gezwungen, zur Realisierung von Speichern zur Bildspeicherung auf die üblichen wort- oder byte-organisierten digitalen Speicher zurückzugreifen. Zur Verminderung der effektiven Zugriffszeit beim Auslesen von Datenblöcken ist es aus dem Artikel «Memory Systems for Image Processing» von van Voorhis und Morrin im IEEE Transaction on Computers, Bd. C-27, Februar 1979, Seite 113 bis 125 bekannt, den Bildspeicher aus mehreren Moduln aufzubauen und die Datenblöcke so geschickt darauf zu verteilen, dass ein ganzer Block mit seiner Vielzahl von Digitalworten in einem einzigen Speicherzugriff ausgelesen werden kann. Die Strategie der Verteilung der einzelnen Elemente eines Datenblocks und die Aufbereitung der Speicheradressen beim Einschreiben und Auslesen ist jedoch kompliziert und verlangt einen grossen Aufwand.

Auch in der US-A-4 090 260 wird ein Speichersystem für ein Digitalbild angegeben, das aus mehreren Speichermoduln aufgebaut ist. Bilddaten, die senkrecht übereinanderliegenden Zeilenausschnitten entsprechen, werden dabei nicht in einem Modul abgelegt, wie es der natürlichen Ordnung entsprechen würde, sondern so in verschiedenen Moduln, dass eine schiefe Anordnung entsteht. Dazu wird beim Übergang von einer Bildzeile zur nächsten ein Modul vollkommen ausgelassen. Mit dieser Art der Einspeicherung soll vermieden werden, dass beim Ausfall eines ganzen Speichermoduls störende vertikale Leerzeilen auf dem angezeigten Bild erscheinen; allerdings wird dadurch Speicherplatz verschwendet. Die einzelnen Speichermoduln werden beim Ein- und Auslesen sequentiell mit gleicher Adresse angesprochen, so dass nur eine relativ langsame Betriebsweise möglich ist. Ausserdem können bei einer derartigen Speicherordnung Daten verschiedener Bildausschnitte nicht gleichzeitig in einem Speicherzyklus eingeschrieben oder ausgelesen werden.

Auch bei der Formatumsetzungseinheit nach FR-A-2 274 112, die in Vektorform vorliegende graphische Daten in ein Speicherbitmuster zur Ansteuerung eines Rasteranzeigesichtgeräts umsetzt, ist es nicht möglich, Daten unterschiedlicher Bildausschnitte mit einem Speicherzyklus ein- bzw. auszulesen, da beispielsweise keine verschränkten Speicher vorgesehen sind.

Die vorliegende Erfindung stellt sich daher die Aufgabe, eine Einrichtung zur Speicherung und Darstellung graphischer Information der eingangs genannten Art anzugeben, in der Daten verschiedenen Formats ein- und ausgegeben werden können und die trotz einer wenig aufwendigen Speichersteuerung ein Ein- und Ausspeichern in einem Speicherzyklus ermöglicht.

Diese Aufgabe wird durch die im Anspruch 1 gekennzeichnete Erfindung gelöst; Ausgestaltungen der Erfindung sind in den Unteransprüchen gekennzeichnet.

Ein wesentliches Element der vorliegenden Einrichtung ist die Speichereinheit, die sowohl Daten von einem Vektorgenerator in Blockform empfängt als auch Daten anderer Quellen, die zeilenweise angeliefert werden. Die gespeicherten Daten werden ebenfalls zeilenweise an ein Raster-Anzeigegerät abgegeben. Zur Adressierung der einzelnen Speichermoduln in der Speichereinheit wird eine spezielle Adressumrechnungsschaltung verwendet, die einfach aufgebaut ist und ohne Programmunterstützung sowohl das Einschreiben von Blöcken und Zeilen als auch das Auslesen von Zeilen des Speichers ermöglicht. Durch weitere Einrichtungen zur Modifizierung der in den Speicher einzuschreibenden Daten erhält die Speichereinheit eine grosse Flexibilität.

Die geschwindigkeitsmässige Anpassung zwischen dem schnell arbeitenden Vektorgenerator und der Speichereinheit erfolgt mit einem zwischengeschalteten Pufferspeicher, der die Zugriffsfrequenz zur Speichereinheit im Maximalfall um den Faktor acht herabsetzt.

Die Erfindung arbeitet mit herkömmlichen Rasteranzeigegeräten (vom Typ «Fernseher»), die relativ billig sind, eine grosse Informationsmenge darstellen können, eine Teillöschung erlauben, farbige und Grau-Anzeige ermöglichen und Schrift zusammen mit Vektordaten präsentieren.

Ein Ausführungsbeispiel der Erfindung wird im folgenden anhand von Zeichnungen näher beschrieben. Es zeigen:

Fig. 1 eine schematische Übersicht der Einrichtung zur Speicherung und Darstellung graphischer Informationen,

Fig. 2A, B eine schematische Darstellung der Verteilung von Datenelementen eines Blocks auf die Speichermoduln der Speichereinheit, wenn der erste bzw. wenn alle Blöcke einer Zeile eingeschrieben sind,

Fig. 3 die Erzeugung der Speicheradresse aus den Adresssignalen verschiedener Adressquellen,

Fig. 4 ein Blockschaltbild der Einrichtung zur Adresserzeugung für den modularen Speicher,

Fig. 5A, B die einzelnen Moduladressbits, die bei der zweidimensionalen Adressierung erzeugt werden,

Fig. 6 ein schematisches Schaltbild der Byteauswahl innerhalb eines Moduls in der Einrichtung nach Fig. 4,

Fig. 7 ein schematisches Schaltbild der Modulauswahl in der Einrichtung nach Fig. 4,

Fig. 8 eine Übersicht über die notwendigen Schiebeoperationen in der Datenvorbereitungseinheit.

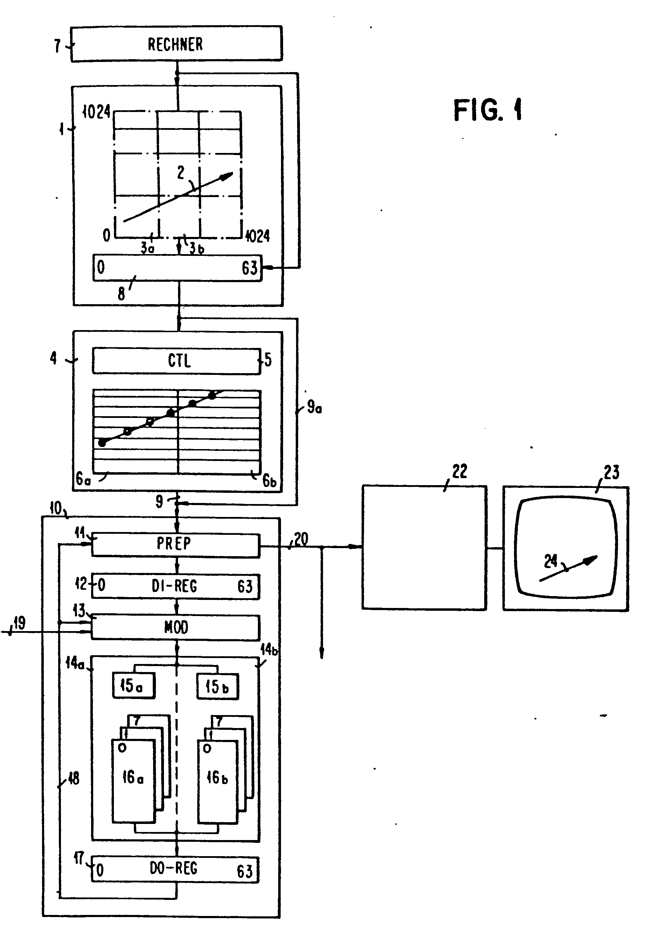

Fig. 1 zeigt die einzelnen Komponenten einer Einrichtung zur Speicherung und Darstellung graphischer Information in schematischer Weise.

Sie besteht aus: einem Vektorgenerator 1, (der seinerseits von einem angeschlossenen Rechner 7 Instruktionen empfängt), einem Blockgenerator 4, einer Speicher-Einheit 10, einem Steuergerät 22 für Bildschirme und einem Raster-Bildschirmgerät 23.

Die darzustellende Information, beispielsweise ein Vektorpfeil 2 kann aus verschiedenen Quellen stammen: entweder aus dem Vektorgenerator 1 oder aus dem Rechner 7, in den sie z.B. durch einen Abtaster eingebracht wurde. Der Rechner benutzt bei der Übertragung ein Zwischenregister 8 in der Vektorgenerator Einheit 1. Diese Informationsquellen sind an eine Speichereinheit 10 angeschlossen, in der die Information in digitalisierter Form gespeichert wird. Zur Darstellung auf einem Bildschirm 23, der nach dem Rasterprinzip wie beim Fernsehen arbeitet, wird die digital gespeicherte Information ausgelesen und in ein Steuergerät 22 für Bildschirme gegeben, wo sie in entsprechende Ansteuersignale (z.B. Spannungen für eine Kathodenstrahlröhre) des Bildschirms umgesetzt wird. Der Vektorgenerator 1 erhält als Eingabe vom Rechner beispielsweise die Anfangs- und Endadresse eines Vektors 2; er erzeugt daraus in sehr rascher Folge die Adressen der einzelnen Punkte, aus denen der Vektor 2 zusammengesetzt ist und benötigt somit in ebenso rascher Folge einen Zugriff zur Speichereinheit. Ein Beispiel für einen derartigen Algorithmus beschreibt die Veröffentlichung J.E. Bresenham «Algorithm for Computer Control of a Digital Plotter», IBM Systems Journal, Vol. 4, No. 1, 1965. Der Rechner liefert die graphische Information in Form von Zeilen, die nacheinander an die Speichereinheit 10 gegeben werden. In beiden Fällen wird die Adresse (x-, y-Koordinate) der Bildpunkte in das Datenausgangsregister 8 des Vektorgenerators eingegeben.

Zur Reduzierung der raschen Zugriffsfolge für den Vektorgenerator schlägt die Erfindung vor, zwischen diesem und der Speichereinheit 10 einen Blockgenerator 4 einzubauen, der ausser Steuereinrichtungen CTL 5 zwei Pufferspeicher 6a und 6b enthält. Der Blockgenerator sammelt eine Anzahl von Adressen (Bildpunkte), die der Vektorgenerator liefert und gibt sich anschliessend mit einem einzigen Zugriff zum Speicher wieder ab.

Die Zugriffszeit der beiden Pufferspeicher ist so gewählt, dass sie der Rate entspricht, mit der der Vektorgenerator 1 Vektorpunkte erzeugen kann. Das Bildfeld des Vektorgenerators 1 (und entsprechend des Anzeigegeräts 23), das schematisch im Inneren des Blocks 1 von Fig. 1 dargestellt ist, soll beispielsweise 1024 × 1024 Punkte umfassen. Dieses Gesamtfeld wird in einzelne quadratische Bildblöcke mit 8 × 8 Bits aufgeteilt, die durch ihre kartesischen Koordinaten (x, y) im Bildfeld charakterisiert werden. Fällt ein neu erzeugter Vektorpunkt in einen neuen bisher noch nicht bearbeiteten Block, so wird ein gerade unbesetzter Pufferspeicher 6a oder 6b ausgewählt und das Abbild dieses entstehenden Blocks in dem Pufferspeicher erzeugt. Fallen später erzeugte Vektorpunkte ausserhalb dieses Blocks, so wird der andere Puffer im Blockgenerator 4 aufgefüllt und der vorher gefüllte Pufferspeicher mit einem einzigen Speicherzugriff in die Speichereinheit 10 übertragen. Der Inhalt eines Puffers wird auch dann an den Speicher übertragen, wenn der Endpunkt eines Vektors in dem betreffenden Block liegt.

In Fig. 1 ist der Fall dargestellt, dass der Vektorgenerator 1 nacheinander die Punkte in den Blöcken 3a und 3b des Bildfelds beginnend links unten erzeugt. In diesem Fall wird zuerst der Pufferspeicher 6a mit den im Block 3a erzeugten Vektorpunkten belegt und in die Speichereinheit übertragen, wenn der erste Punkt im Block 3b erzeugt wird. Dieser und die folgenden werden in den

Pufferspeicher 6b eingeschrieben, bis auch dieser gefüllt ist und wieder der inzwischen geleerte Pufferspeicher 6a gefüllt wird.

Auf diese Weise reduziert sich die Häufigkeit der Zugriffe vom Vektorgenerator 1 zur Speichereinheit 10. Das Mass der Reduzierung ist davon abhängig, wieviele Vektorpunkte in einen Block fallen und kann bei maximaler Auffüllung eines Blocks den Faktor 8 erreichen. Eine typische Reduzierung liegt im Bereich von 5–6.

Im Ausführungsbeispiel hat jeder Pufferspeicher eine Kapazität von $8 \times 1$ Byte; die kartesischen Koordinaten x, y eines Bildpunkts bestehen bei einem Bildfeld mit $1024 \times 1024$ Bits aus 10 Bits. Zum Einschreiben des Puffers bestimmen die niedrigstelligen 3 Bits der y-Adresse das Byte im Puffer, die niedrigstelligen 3 Bits der x-Adresse das betreffende Bit in diesem Byte. Die übrigen 7 Bits beider Adressteile werden in Adressregistern gehalten und bestimmen den Teil des Speichers, in dem später der gesamte Pufferinhalt eingeschrieben werden soll.

Die Sammelleitung 9 zwischen dem Blockgenerator 4 und der Speichereinheit 10 hat eine Breite von 64 logischen Bits (bei geringeren physikalischen Leitungsbreiten erfolgen mehrere Übertragungsvorgänge hintereinander). Der Rechner benötigt nur eine Breite von 32 logischen Bits. Das Datenauffangsregister 8 des Vektorgenerators 1 kann wahlweise auch über eine 32 Bit breite Sammelleitung 9a unter Umgehung des Blockgenerators 4 an die Speichereinheit 10 angeschlossen werden.

Nach der bisherigen Beschreibung muss die Speichereinheit 10 in der Lage sein, in einem Speicherzyklus einen gesamten 64-Bit-Block vom Blockgenerator 4 oder einen 32-Bit-Block vom Rechner abzuspeichern. Ausserdem müssen zum Auffrischen der Zeilen des Anzeigegeräts 64-Bit-Blöcke pro Speicherzugriff an das Steuergerät 22 abgegeben werden können. (Eine Zeile des nach dem Rasterprinzip arbeitenden Bildsichtgeräts umfasst 1024 Bits und ist in 16 Blöcke à 64 Bit aufgeteilt).

Um diese strenge Anforderung zu erfüllen, ist in der Speichereinheit ein besonderes Adressumsetzverfahren verwirklicht, mit dem die Bildblöcke so auf einzelne Speichermodule 16a, 16b verteilt werten können, dass zu keinem Modul mehr als ein Zugriff erforderlich ist. Diese sog. zweidimensionale Adressierung wird später im einzelnen erläutert.

Die einzelnen Komponenten der Speichereinheit 10 sind die Datenvorbereitung 11, ein Dateneingangsregister DI REG 12 für den Speicher, eine Datenmodifizierung 13, zwei Speichersegmente 14a, 14b mit jeweils einer Steuerung 15a, 15b und mehreren Speichermoduln 16a, 16b, sowie ein Datenausgangsregister DO REG 17. Eine Sammelleitung 18 verbindet den Ausgang des Datenausgangsregisters mit der Datenmodifizierung 13 und der Datenvorbereitung 11.

Die Einheit 11 zur Datenvorbereitung (PREP) besteht aus mehreren (z.B. 8) Schieberegistern, die unter Parallelsteuerung arbeiten. Jedes Schieberegister kann entweder seriell arbeiten – die Daten werden an einem Ende des Schieberegisters aufgenommen, hindurchgeschoben und am anderen Ende ausgegeben – oder als ringförmiges Schieberegister, bei dem Daten zirkulieren. Im Ausführungsbeispiel handelt es sich um 8 Schieberegister mit einer Kapazität von jeweils 8 Bits. Jedes Schieberegister kann parallel geladen werden.

Die Datenvorbereitungseinheit arbeitet in drei Betriebsweisen:

1. Dateneingabe: Hier werden die Datenblocks ($8 \times 8$ Bits) des Blockgenerators oder die 32-Bit-Sätze der anderen anschliessbaren Einheiten in die Schieberegister eingegeben.
2. Datenausrichtung: Wenn alle Daten in die Schieberegister eingegeben sind, müssen sie für die Bedürfnisse der zweidimensionalen Adressierung auf bestimmte Art und Weise ausgerichtet werden. Dieses Ausrichten beim Einschreiben und entsprechend umgekehrt beim Auslesen des Speichers erfolgt, wenn die Schieberegister der Datenvorbereitungseinheit zyklisch zusammengeschaltet sind; eine nähere Beschreibung folgt weiter hinten (Fig. 8).
3. Datenausgabe: Nach dem Auslesen des Speichers und der Ausrichtung werden die Daten an die entsprechenden Verbraucher abgegeben. Beispielsweise erhält das Steuergerät 22 die für die Bildauffrischung erforderlichen 64 Bits in vier Schüben zu je 16 Bits.

Das Dateneingangsregister 12 hat ebenso wie das Datenausgangsregister 17 eine Breite von 64 Bits.

Die an das Dateneingangsregister angeschlossene Schaltung 13 zur Datenmodifizierung (MOD) erlaubt es, die Daten vor dem Einschreiben in den Speicher zu ändern oder zu ergänzen. Beispielsweise können neue Daten, die aus dem DI-Register 12 in die Einheit 13 gelangen, die dort befindlichen, aus dem Speicher über Leitung 18 ausgelesenen Daten entweder ganz oder auch nur teilweise überschreiben. Ebenso können ausgewählte Daten in der Einheit 13 gelöscht werden. Entsprechende Steuerbefehle werden über Leitung 19 zugeführt.

Der eigentliche Speicherblock besteht aus zwei Segmenten 14a und 14b, die im Ausführungsbeispiel jeweils 8 Speichermoduln 16a, b umfassen. Diese beiden Segmente können verschränkt arbeiten. Die Eingänge und die Ausgänge entsprechender Karten beider Segmente sind miteinander verbunden.

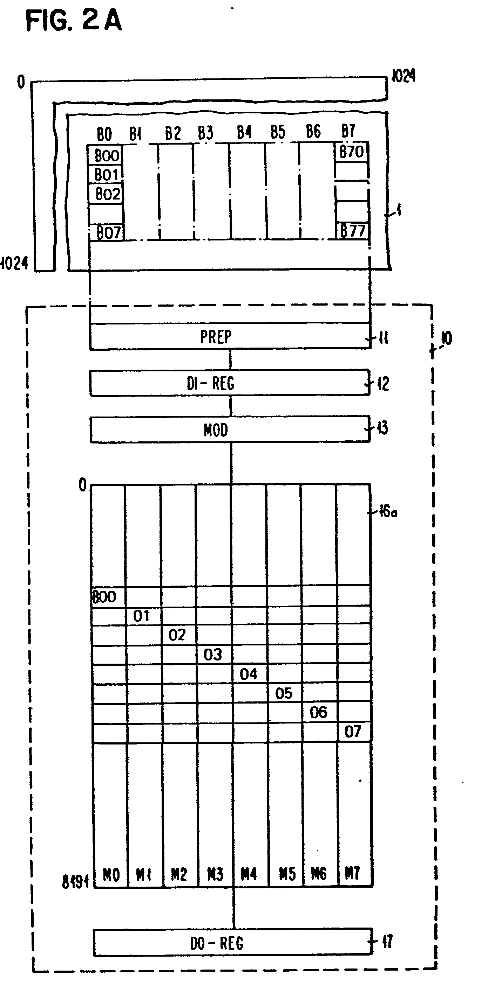

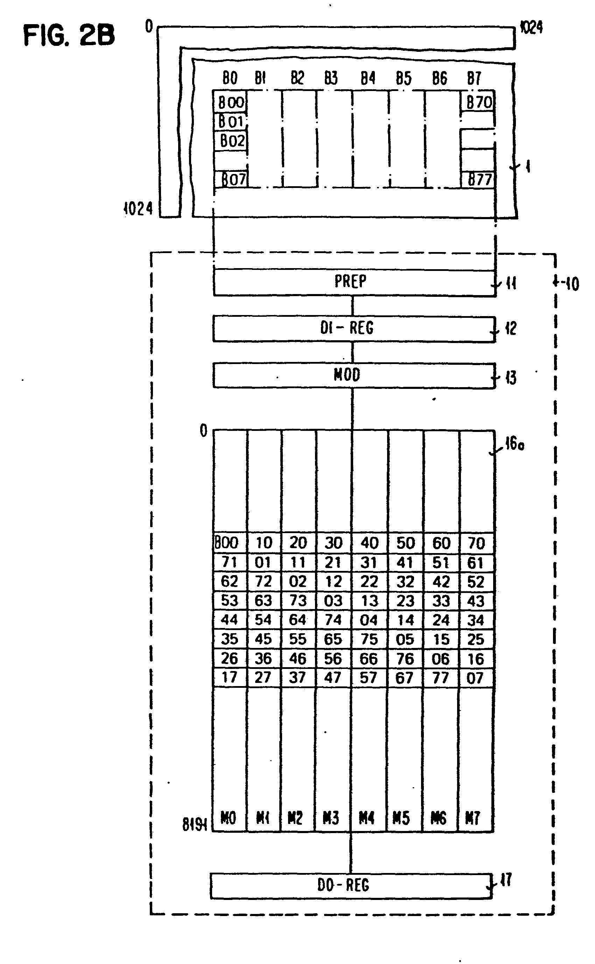

Das Prinzip der zweidimensionalen Adressierung wird nun anhand von Fig. 2 näher besprochen. Das Ziel dieses Adressierverfahrens besteht darin, die einzelnen Elemente eines Datenblocks, z.B. eines $8 \times 8$ Bit-Blocks vom Generator 4 so auf die einzelnen separat adressierbaren Module der Speichersegmente 14a, 14b zu verteilen, dass kein Modul mehr als ein Element des Blocks enthält und somit alle Elemente eines Blocks durch einen gleichzeitigen Zugriff zu allen Speichermoduln in einem Zyklus ausgelesen werden können.

Jedes Segment 14a bzw. 14b des Speichers besteht aus acht mit M0 ... M7 bezeichneten Speichermoduln 16a, b (z.B. separat adressierbaren Karten) mit einer Zugriffsbreite von jeweils 8 Bits (ein Byte).

Als Beispiel soll das Abspeichern von 8 im Bildfeld 1 nebeneinanderliegenden Blöcken B0 ... B7 des Bildfeldes mit jeweils $8 \times 8$ Bits betrachtet werden.

Der für die Adressumsetzung gewählte Algorithmus ist nun so, dass die ersten acht Bits $B_{00}$ von Block B0 auf Adresse N des Moduls M des Segments gebracht werden, die zweiten acht Bits (die zweite Zeile des Blocks B0) auf die Adresse $(N+8)$ des Moduls $(M+1)$ modulo 8, die dritte Zeile des Blocks B0 auf Adresse $N+16$ des Moduls $(M+2)$ modulo 8 usw. Entsprechend der Darstellung in Fig. 2A sind somit die Elemente (Bytes) des ersten Blocks B0 treppenförmig gegeneinander versetzt auf die einzelnen Module eines Speichersegmentes verteilt.

Der nächste Block B1, der dem eben gespeicherten Block B0 auf der gleichen Zeile des Bildfeldes rechts benachbart ist, wird anschliessend in gleicher Weise behandelt; sein erstes Byte wird auf Adresse N des Moduls $(M+1)$ modulo 8 gesetzt, sein zweites Byte auf die Adresse $N+8$ des Moduls $(M+2)$ modulo 8 usw. Die weiteren auf der gleichen Zeile des Gesichtsfelds 1 liegenden Blöcke B2 bis B7 werden in der gleichen Weise aufgelöst und die verschiedenen Speichermoduln eingeschrieben.

Die beiden Teilfiguren A und B von Fig. 2 zeigen die Belegung der Speichermodule M0 bis M7 eines Speichersegments 1A zu zwei verschiedenen Zeitpunkten. In Fig. 2A ist der Block B0 eingeschrieben. Dessen einzelne Elemente (Bytes) $B_{00}$ bis $B_{07}$ sind beginnend bei Adresse N stufenförmig im Speichersegment angeordnet. Das Ein- und Auslesen dieses Blocks kann somit mit einem Speicherzugriff erfolgen.

Die Belegung der Module nach dem Einschreiben aller zu einer 64-Bit-Zeile gehörigen Blocks B0 bis B7 des Bildfelds ist in Fig. 2B dargestellt. Daraus ist ersichtlich, dass bei diesem Verfahren die ersten Bytes aller Blocks, nämlich $B_{00}$, $B_{10}$ ... $B_{70}$ auf Adresse N jedes Moduls liegen und somit eine durchgehende Speicherzeile bilden. Diese Zeile kann somit in einem einzigen Speicherzugriff in das Datenausgangsregister ausgelesen und von dort an das Bildsichtgerät gegeben werden (zu dessen Auffrischung).

Das Einschreiben von durchgehenden Speicherzeilen ist ebenfalls durch Adressieren aller Speichermodule mit derselben Adresse N möglich.

Das hier vorgeschlagene Verfahren erlaubt es, in einfacher Weise den Speicher sowohl blockweise als auch zeilenweise jeweils in einem einzigen Speicherzyklus einzuschreiben oder auszulesen. Das bei der Blockverarbeitung erforderliche Verschieben der einzelnen Bytes eines Blocks erfolgt, wie früher erwähnt, in der Datenvorbereitungseinrichtung 11 in zyklisch arbeitenden Schieberegistern. Aus den bisherigen Erläuterungen ist auch die Bedeutung des Begriffs «zweidimensionale Adressierung» erkennbar: die einzelnen Elemente eines Blocks werden auf verschiedenen Speichermoduln (erste Dimension) und auf verschiedenen Adressen (zweite Dimension) gespeichert.

Einzelheiten der Adressumrechnung werden im folgenden beschrieben. Das zugrundegelegte System weist einen Speicher mit einer Gesamtkapazität von einem Megabit auf, ist in zwei gleich grosse Segmente 14a und 14b aufgeteilt, die jeweils acht Speichermodule 16a, b mit einer Kapazität von acht Kilobytes (8 K × 1 Byte) enthalten.

Zur Adressierung dieses Speichers dienen 15 Adressbits; die kleinste adressierbare Einheit in dem Speicher ist also ein Datenelement mit 32 Bytes. Adressbit 13 dient zur Auswahl eines der beiden Segmente 14a, 14b.

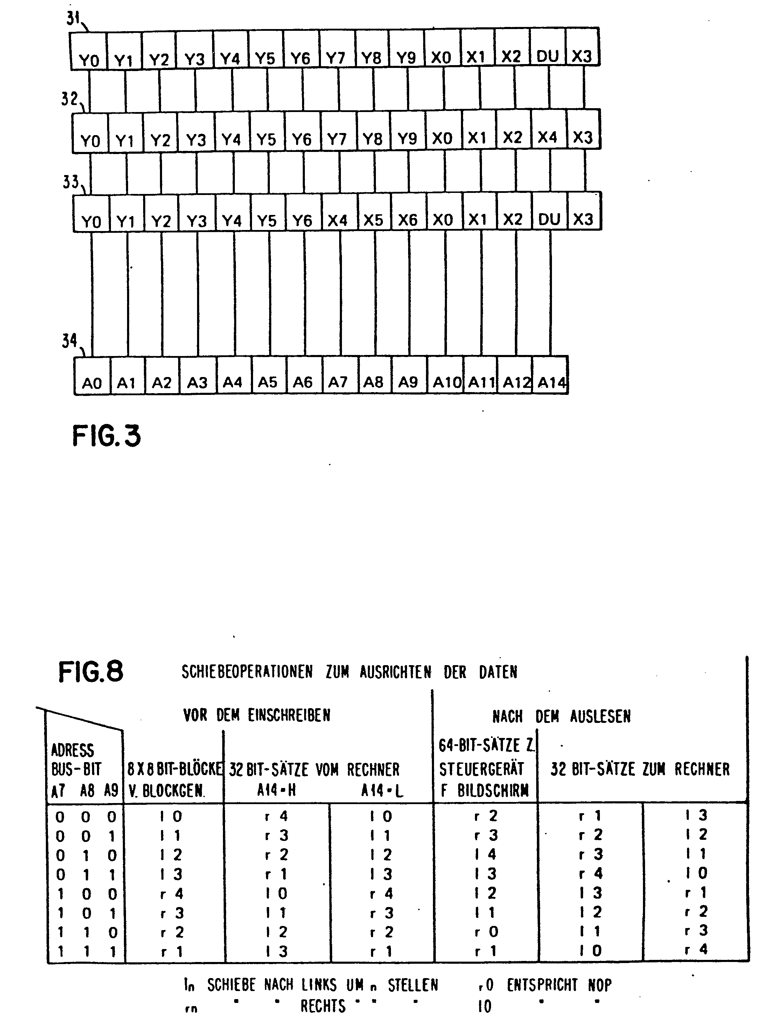

Die Adressen werden von folgenden an die Speichereinheit angeschlossenen Geräten geliefert (Fig. 3):

1. Vom Blockgenerator: dieser liefert eine 14-Bit-Adresse (je 7 Bits X0–X6 und Y0–Y6 für die beiden Koordinatenrichtungen des Bildschirms) entsprechend den 16 K Blöcken des Bildfeldes mit jeweils $8 \times 8$ Bits. Die Adressbits sind mit A0–A12, A14 bezeichnet.

2. Von der Steuereinheit für den Bildschirm: diese liefert ebenfalls eine 14-Bit-Adresse, von der vier Bits (x-Bits) eines der 16 64-Bitelemente einer Zeile des Bildschirms (mit insgesamt 1024 Bits) bezeichnen. Die übrigen 10 Bits geben die Zeilennummer auf dem Bildschirm an.

3. Vom Rechner: dieser liefert jeweils einen Block von 32 Bits an die Speichereinheit und erzeugt eine Adresse mit 15 Bits, von der ebenfalls 4 Bits die x-Koordinate betreffen.

Die Umsetzung der von den verschiedenen Adressquellen gelieferten Adressen x, y in die Speicheradressen A0–A12, A14 ist in Fig. 3 dargestellt. Block 31 zeigt das Format einer Adresse, die vom Bildschirmsteuergerät geliefert wird, Block 32 das Adressformat vom Rechner und Block 33 das Adressformat vom Blockgenerator. Das Bit $X_3$ dient in allen Fällen zur Auswahl des Speichersegments; das Bit DU ist ohne Bedeutung. Block 34 stellt das Format der Adresse dar, die in der Speichereinheit 10 Verwendung findet.

Diese Adresse Ai wird in das Speicheradressregister des jeweiligen Speichersegments 14a, 14b gegeben. Sie kann jedoch in dieser Form noch nicht zur Adressierung der Speichermodule verwendet werden, ohne dass eine weitere Adressumsetzung erfolgt. Zu dieser Adressumsetzung werden aus den Adressbits im Speicheradressenregister Auswahlsignale für die einzelnen Speichermodule und die Adressen innerhalb jedes Moduls erzeugt. Die Bits der letztgenannten Adressen werden mit SAR1 bis SAR13 bezeichnet (entsprechend den 8 K Bytes pro Modul). Sie entstehen folgendermassen: aus den Bits A0 bis A6 sowie A10, A11 und A12 der Adresse entstehen die Moduladressen SAR1 bis SAR4 und SAR8 bis SAR13. Die noch fehlenden Moduladressen SAR5, SAR6, SAR7 werden abhängig von der Quelle, die die Adresse geliefert hat, aus den Bits A7, A8, A9 und A14 der Adresse berechnet. Es lassen sich drei Fälle unterscheiden:

### Fall 1

Handelt es sich um einen Zugriffswunsch der Steuereinheit für den Bildschirm, so werden alle acht Module des ausgewählten Segments durch ein Signal «Modulauswahl» aktiviert und die Speichermodule alle mit derselben Adresse adressiert. Die Bitwerte A7, A8 und A9 der Adresse entsprechen dann direkt den Modularadressen SAR5, SAR6, SAR7. Bit A14 wird nicht beachtet.

### Fall 2

Bei Zugriffswünschen des Rechners, bei dem also ein Datensatz von 32 Bits gespeichert werden muss, brauchen nur vier Speichermodule eines Segments ausgewählt zu werden. Welche der vier Module gewählt werden, hängt von den Bits A7, A8, A9 und A14 ab. Die Zuordnung erfolgt nach folgendem Verfahren: die Bits A14 und A7 der Adresse werden nach der Funktion «Exklusiv-ODER» verknüpft und ergeben zusammen mit den Bits A8 und A9 die Zuordnung:

Tabelle 1

| A7 XOR A14 | A8 | A9 | ausgewählte Module | | | |
|---|---|---|---|---|---|---|
| 0 | 0 | 0 | 0 | 1 | 2 | 3 |
| 0 | 0 | 1 | 1 | 2 | 3 | 4 |
| 0 | 1 | 0 | 2 | 3 | 4 | 5 |
| 0 | 1 | 1 | 3 | 4 | 5 | 6 |
| 1 | 0 | 0 | 4 | 5 | 6 | 7 |
| 1 | 0 | 1 | 5 | 6 | 7 | 0 |
| 1 | 1 | 0 | 6 | 7 | 0 | 1 |
| 1 | 1 | 1 | 7 | 0 | 1 | 2 |

### Fall 3

Bei Zugriffswünschen des Blockgenerators erfolgt die Adressumsetzung nach den früher beschriebenen zweidimensionalen Adressverfahren. Zur Speicherung eines Blockes werden alle acht Module eines Segments ausgewählt, doch wird jeder Modul mit verschiedenen Adressbits SAR5 bis SAR7 adressiert.

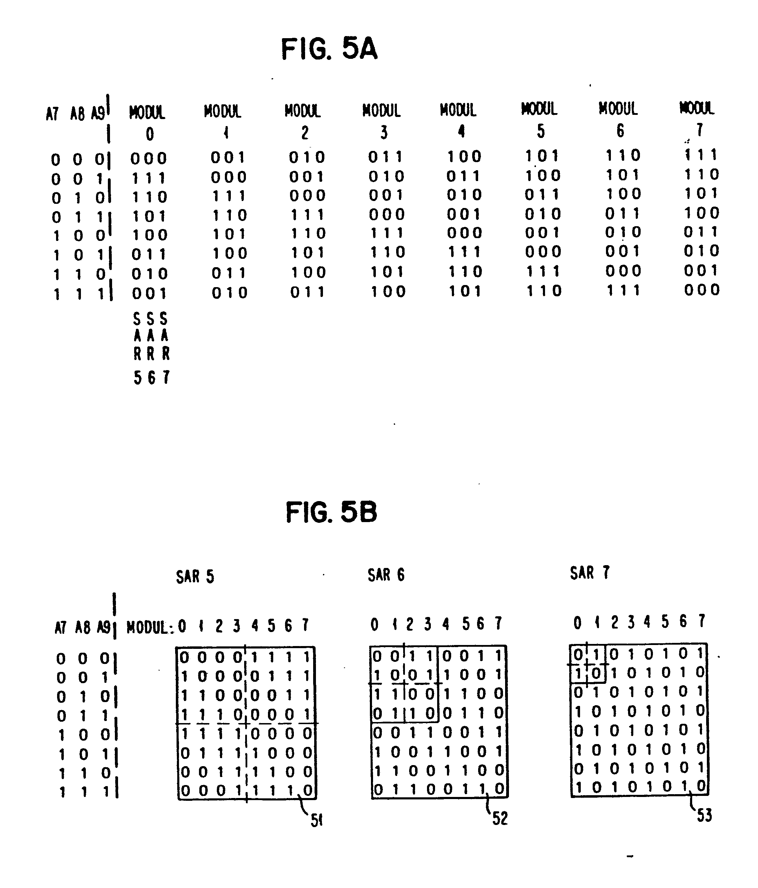

Die geforderten Kombinationen zeigt Fig. 5A. Diese Tabelle wird später näher erläutert; sie lässt sich auch in folgender Rechenvorschrift zusammenfassen:

Wird jedem der acht Module eines Segments die binäre Adresse K0, K1, K2 zugeordnet, so berechnet sich die für die jeweilige Karte massgebende Moduladresse SAR5, SAR6, SAR7 durch binäre Addition der folgenden drei Binärzahlen:

$$
\begin{array}{lll}
\overline{A7} & \overline{A8} & \overline{A9} \\
+ \quad K0 & K1 & K2 \qquad \text{(Gleichung 1)} \\
+ \quad 0 & 0 & 1 \\
\hline
SAR5 & SAR6 & SAR7 \quad \text{mod. 8}
\end{array}
$$

Ist beispielsweise die Moduladresse für Karte 5 (K0 = 1, K1 = 0, K2 = 1) gesucht und stehen die Adressbits A7, A8, A9 auf 0,1, 1 so lautet die Rechnung

$$
\begin{array}{rcc}
1 & 0 & 0 \\
+ \quad 1 & 0 & 1 \\
+ \quad 0 & 0 & 1 \\
\hline
1 \quad 0 & 1 & 0
\end{array}
$$

Die Byte-Adresse für Modul 5 ist also SAR5 = 0, SAR6 = 1, SAR7 = 0.

Da der Stellenwert von SAR7 in der zehnstelligen SAR-Adresse $2^3$ beträgt, werden die Bytes eines Blocks mit einem Abstand von 8 Adressen auf benachbarten Karten abgelegt.

Byte 0 eines Blockes muss auf dem Modul gespeichert werden, für den die folgende Beziehung gilt: K0, K1, K2 = A7, A8, A9. Um dies durchführen zu können, müssen die Daten zuvor in der Datenvorbereitungseinheit ausgerichtet werden.

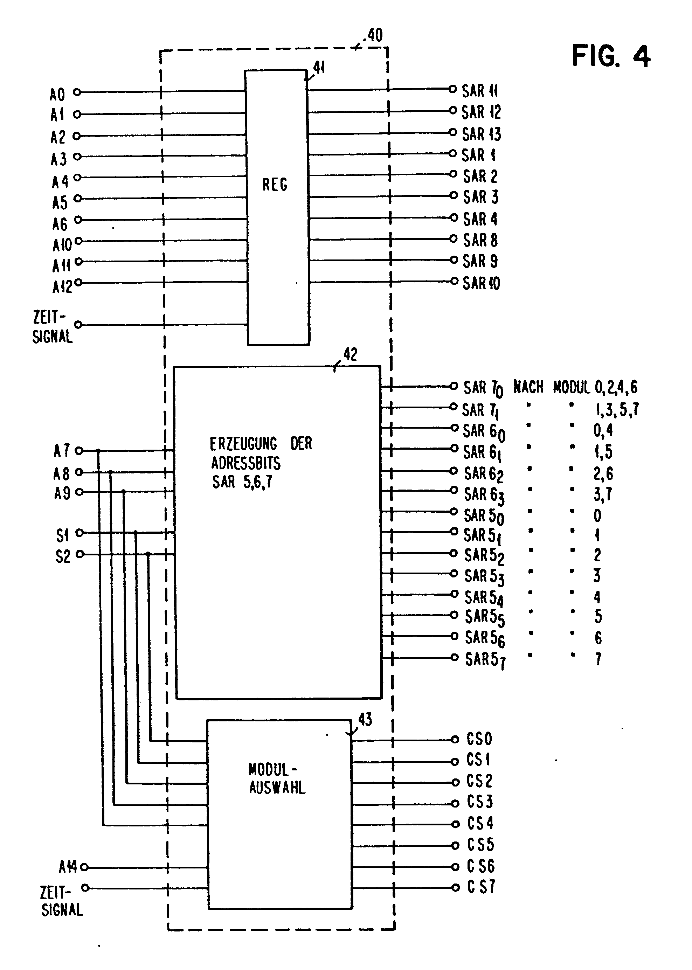

Alle bisher beschriebenen Adressumsetzungen werden von einer einzigen Schaltung durchgeführt, deren Blockschaltbild in Fig. 4 wiedergegeben ist. Die gesamte Umsetzschaltung 40 besteht aus einem Register 41 und zwei logischen Schaltungen 42, 43. Im Register 41 werden die Bits A0 bis A6 und A10 bis A12 der Speicheradresse gespeichert und während des gesamten Speicherzyklus verfügbar gemacht. Diese Bits entsprechen den Bits SAR1 bis SAR4 und SAR 8 bis SAR13 der Byteadresse innerhalb eines 8K-Moduls (s. Fig. 4). Die logische Schaltung 42 erzeugt aus den Adressbits A7 bis A9 und zwei Steuersignalen S1, S2 die restlichen Bits SAR5, SAR6, SAR7 der Byteadresse für die verschiedenen Moduln in Abhängigkeit von der Adressquelle. Die Belegung der Eingänge S1, S2 gibt in codierter Form die Adressquelle an:

| Zugriffswunsch von | S1 | S2 |
|---|---|---|
| Steuereinheit für Bildschirm | 1 | ohne Bedeutung |
| Rechner | 0 | 1 |
| Blockgenerator | 0 | 0 |

Die logische Schaltung 43 erzeugt aus den gleichen Eingangssignalen A7 bis A9 und S1, S2 zusammen mit Adressbit A14 und geeigneten Zeitsignalen die Auswahlsignale für die jeweiligen Moduln (Karten). Entsprechend den acht Moduln (Karten) sind acht Auswahlsignale CS0 bis CS7 vorhanden.

In der Schaltung 42 erfolgt die eigentliche Umsetzung des Byte-Teils der Adressen SAR. Im Gegensatz zu den anderen Adressbits werden die Bits SAR5, SAR6, SAR7 nicht parallel allen Moduln eines Segments zugeführt; statt dessen werden sie in Abhängigkeit der gerade aktiven Adressquelle in folgender Weise erzeugt und verteilt:

Das (niedrigstellige $2^0$) Adressbit SAR7 wird zweifach generiert, als Bit SAR70 und SAR71. Das erstgenannte, SAR70, wird den Moduln 0, 2, 4, 6 zugeführt, das Bit SAR71 den Moduln 1, 3, 5, 7.

Das Adressbit SAR6 wird vierfach generiert und folgendermassen auf die einzelnen Moduln verteilt:

SAR60 für die Moduln 0,4
SAR61 für die Moduln 1,5
SAR62 für die Moduln 2,6
SAR63 für die Moduln 3,7.

Das (hochstellige $2^2$) Adressbit SAR5 wird achtfach erzeugt und den folgenden Moduln individuell zugeführt:

SAR50 für Modul 0,
SAR51 für Modul 1,
SAR52 für Modul 2,
SAR53 für Modul 3,
SAR54 für Modul 4,
SAR55 für Modul 5,
SAR56 für Modul 6,
SAR57 für Modul 7.

Die Belegung der Ausgangsleitungen SAR5, 6, 7 geschieht nach folgender Vorschrift:

Fall 1

Zugriffswunsch der Steuereinheit für den Bildschirm (S1 = 1).

In diesem Fall werden alle acht Module eines Segments aktiviert und jeder dieser Module wird mit derselben Adresse beaufschlagt. Alle acht Ausgangssignale CS der Schaltung 43 sind somit aktiv und Schaltung 42 gibt die Adressbits A7, A8, A9 unverändert auf die Ausgangsleitungen SAR5, SAR6, SAR7.

Es gilt also:
A9 = SAR70, 71,
A8 = SAR60, 61, 62, 63,
A7 = SAR50, 51, 52, 53, 54, 55, 56, 57.

Das Eingangsbit A14 bleibt dabei unberücksichtigt.

Fall 2

Zugriffswunsch des Rechners (S1 = 0, S2 = 1).

In diesem Fall werden 32-Bit-Sätze übertragen. Schaltung 43 selektiert hier eine Gruppe von vier der acht Moduln eines Segments entsprechend dem Algorithmus in Tabelle 1. Schaltung 42 gibt die Adressbits A7, A8, A9 in der gleichen Weise durch wie in Fall 1.

Fall 3

Zugriffswunsch des Blockgenerators (S1 = 0, S2 = 0).

Hier werden wieder alle Moduln des ausgewählten Segments aktiviert. Alle Ausgangssignale von Schaltung 43 sind angesetzt. Schaltung 42 gibt in diesem Fall jedoch für jeden Modul eine verschiedene Adresse aus; diese Adressen sind in Fig. 5A zusammengefasst.

Die ersten drei Spalten in Fig. 5A mit der Bezeichnung A7 bis A9 geben in acht Zeilen die Konfiguration der drei Adressbits A7 bis A9 an. Für jede dieser Eingangsadressen erzeugt Schaltkreis 42 bei der zweidimensionalen Adressierung eine aus ebenfalls drei Bits bestehende Moduladresse SAR für jeden der Moduln 0 bis 7. Diese Adressen sind in den entsprechend gekennzeichneten Abschnitten von Fig. 5A wiedergegeben.

Die Gesamtheit aller Moduladressen von Fig. 5A weist gewisse Symmetrien auf, die in vorteilhafter Weise zur Vereinfachung der Adressumsetzschaltung 42 verwendet werden können. Diese Symmetrien werden deutlicher, wenn alle Adressbits SAR gleicher Wertigkeit für alle Module zusammengefasst werden. Diese Zusammenfassung ist in Fig. 5B erfolgt. Block 51 in Fig. 5B enthält die Bits SAR5 aller Moduladressen, Block 52 die Bits SAR6 aller Moduladressen und Block 53 die Bits SAR7 aller Moduladressen. Das erste Bit der ersten Zeile in Block 51 entspricht somit dem hochwertigen Bit SAR5 der an Modul 0 angelegten Adresse, wenn die Bits A7 bis A9 den Wert 000 haben; das letzte Bit der letzten Zeile in Block 52 entspricht dem mittleren Bit SAR6 der an Modul 7 angelegten Adresse, wenn die Bits A7 bis A9 den Wert 111 haben usw.

In Block 51 ist eine Symmetrie zwischen den vier Quadranten erkennbar. Die Bits zweier an einer Ecke zusammenstossender Quadranten sind untereinander gleich und das Komplement der Bits der beiden anderen Quadranten. Um eine Bitbelegung entsprechend Block 51 zu erhalten, ist es also nur notwendig, einen der Quadranten durch logische Schaltungen aus den Eingangsbits Ai zu erzeugen; die Bitwerte in den anderen Quadranten können daraus entweder direkt oder durch Komplementbildung abgeleitet werden.

Block 52 kann in gleicher Weise durch Komplementbildung und/oder Verschiebung der $2 \times 2$-Teilblocks oben links erzeugt werden, Block 53 sogar durch Komplementbildung und/oder Verschiebung des ersten Elements der ersten Zeile. Diese Blöcke können aber auch in folgender, äquivalenter Weise aufgebaut werden:

Im Block 52 kann die Spalte Nr. 2 durch Komplementbildung aus der Spalte 0 erzeugt werden, die Spalte 4 durch Komplementbildung aus der Spalte 2, die Spalte 6 als Komplement aus der Spalte 4; ebenso kann Spalte 3 als Komplement der Spalte 1, Spalte 5 als Komplement der Spalte 3 und Spalte 7 als Komplement der Spalte 1 erzeugt werden. Ausserdem ist die obere Hälfte von Block 52 gleich dessen unterer Hälfte.

In Block 53 gehen aufeinanderfolgende Spalten durch Komplementbildung auseinander hervor; z.B. Spalte 1 durch Komplementbildung von Spalte 0. Dieselbe Beziehung gilt auch in bezug auf die Zeilen, die ebenfalls durch Komplementbildung der jeweils vorangehenden entstehen.

Wie diese Symmetriebeziehungen im einzelnen ausgenutzt werden können, wird bei der genauen Beschreibung des Schaltkreises 42 erläutert.

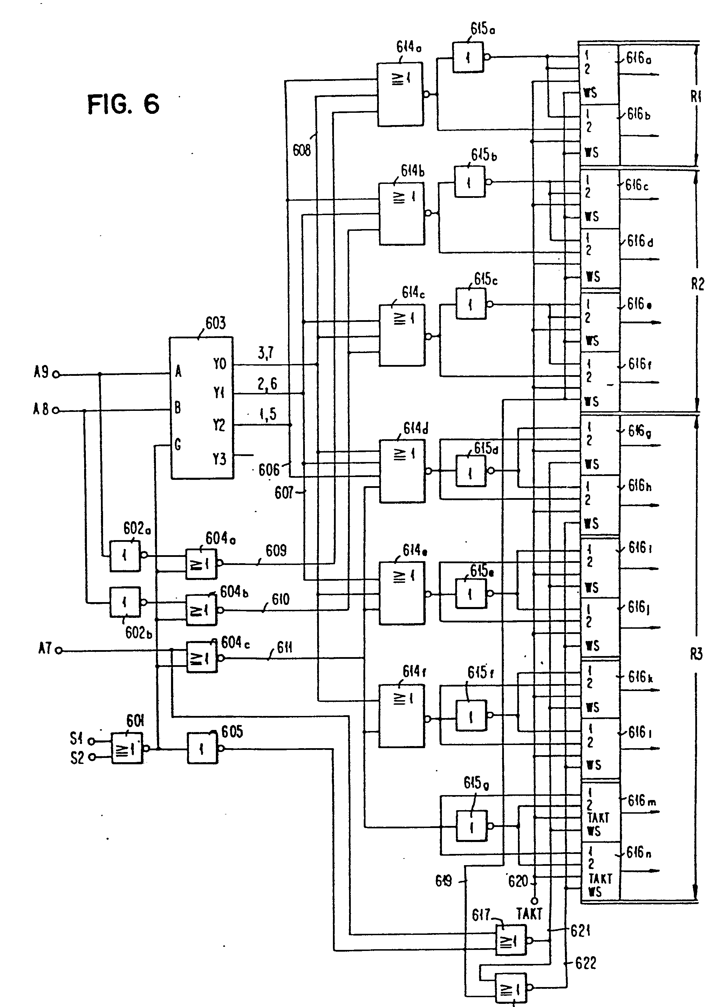

Fig. 6 zeigt den Schaltkreis zur Erzeugung von Moduladressen $SAR_i$ aus den Eingangssignalen A7, A8, A9, S1, S2. Der Schaltkreis arbeitet in der hier dargestellten Ausgestaltung mit negativer Logik, d.h. dem logischen Wert 0 der Eingangssignale entspricht der hohe Pegel (H = High), dem logischen Wert 1 der niedere Pegel (L = Low).

Am Ausgang des Schaltkreises stehen in drei Registergruppen R1, R2, R3 jeweils gleichstellige Bits SAR der erzeugten Moduladressen zur Verfügung. Die Ausgangssignale SAR70, 71 der beiden Register in Gruppe R1 entsprechen dabei den im Block 53 von Fig. 5b zusammengefassten Modul-Adressbits SAR7, die Ausgangssignale SAR60–63 der vier Register R2 den in Block 52 dargestellten Bits SAR6 und die Ausgangssignale SAR50–57 der 8 Register in R3 den in Block 51 dargestellten Werten SAR5.

Die Ausgangssignale der Register 616 entsprechen folgenden Adresssignalen:

| R1 | Register | 616a | SAR70 |
|----|----------|------|-------|
|    |          | 616b | SAR71 |
| R2 | Register | 616c | SAR60 |
|    |          | 616d | SAR61 |
|    |          | 616e | SAR62 |
|    |          | 616f | SAR63 |
| R3 | Register | 616g | SAR50 |
|    |          | 616h | SAR51 |
|    |          | 616i | SAR52 |
|    |          | 616j | SAR53 |
|    |          | 616k | SAR54 |
|    |          | 616l | SAR55 |
|    |          | 616m | SAR56 |
|    |          | 616n | SAR57 |

Die einfache Struktur der Adressumsetzschaltung 42 nach Fig. 6 ergibt sich aus der Beachtung der oben besprochenen Symmetrieeigenschaften innerhalb der einzelnen Bitgruppen. Nach Möglichkeit wurden alle Bitkonfigurationen A7 bis A9, die zu gleichen Ausgangsbits innerhalb einer Spalte der Teilblöcke von Fig. 5A führen, zusammengefasst und die restlichen Tabellenwerte daraus durch Komplementbildung abgeleitet.

Die Adressumsetzschaltung nach Fig. 6 besteht aus handelsüblichen Bauelementen, wie beispielsweise Invertern, NOR-Gliedern, einem Decodierer 603 und mehreren taktgesteuerten Verriegelungsschaltungen 616.

Die Registerstufen 616 sind taktgesteuerte Verriegelungsschaltungen vom Typ SN 74 298 der Fa. Texas Instruments. Beim Anliegen eines Taktimpulses (Leitung 620) übernehmen sie die Information, die auf ihrer Eingangsleitung 1 oder auf ihrer Eingangsleitung 2 anliegt, je nachdem, auf welchem Pegel der Anschluss WS «Wortauswahl» liegt. Hat der Anschluss «Wortauswahl» der in der Schaltung nach Fig. 6 mit den Leitungen 619, 621 oder 622 verbunden ist, den Pegel L, so wird das Eingangssignal auf Leitung 1 übernommen, hat er den Pegelwert H, so gelangt die Information auf der Eingangsleitung 2 zur Verriegelung.

Der Decodierer 603 ist beispielsweise ein 2–4-Decodierer der Fa. Texas Instruments mit der Bezeichnung SN 74 139. Dieser Decodierer erzeugt vier Ausgangssignale, wenn zwei Eingangssignale angelegt werden. Im vorliegenden Fall sind die Eingangssignale die Adressbits A8, A9; von den Ausgängen werden nur drei benutzt; das erste Ausgangssignal (Y0, verbunden mit Leitung 608) wird aktiv, d.h. erhält den Pegel L (= logisch 1), wenn die Adressbits A3 und A7 den logischen Wert 1 (den Pegel L) haben. Dann liegt entweder die Adresse A7, A8, A9 = 011 oder 111 vor; in Fig. 6 sind diese Werte als Dezimalzahlen 3 und 7 am Dekoderausgang angegeben. Das zweite Ausgangssignal (Y1, verbunden mit Leitung 607) wird bei den (Dezimal-)Adressen 2 und 6 aktiv, das dritte Ausgangssignal (Y3, verbunden mit Leitung 606) bei den (Dezimal-)Adressen 1 und 5. Der gesamte Dekoderschaltkreis 603 wird aktiviert, wenn an seinem Eingang G ein Steuersignal mit Pegel L anliegt.

Die Ausgangleitung 606 des Dekoders ist mit den NOR-Gliedern 614a, b, d verbunden, Leitung 607 mit NOR-Gliedern 614b, c, d, e und Leitung 608 mit NOR-Gliedern 614a, c, d, e, f.

Die Eingangssignale A9 und A8 werden ausserdem über Inverter 602a, b, je einem NOR-Glied 604a, b zugeführt, ein drittes NOR-Glied 604c empfängt das Eingangssignal A7 direkt.

Den zweiten Eingängen der NOR-Glieder 604 wird das Ausgangssignal eines NOR-Glieds 601 zugeführt; das Ausgangssignal des NOR-Gliedes 601 gelangt ausserdem zum Setzeingang des Dekodierers 603. Die Eingangsklemmen des NOR-Glieds 601 empfangen die Steuersignale S1, S2, mit denen in codierter Form die Quelle des Adressbits A7–A9 angezeigt wird.

Der Ausgang von NOR-Glied 604a ist über Leitung 609 mit NOR-Glied 614a verbunden, der Ausgang von NOR-Glied 604b über Leitung 610 mit NOR-Gliedern 614b, c und der Ausgang von NOR-Glied 604c über Leitung 611 mit NOR-Gliedern 614d, e, f. Leitung 611 ist ausserdem direkt mit den Eingängen 1 der Registerstufen 616m und n verbunden, sowie über Inverter 615g mit den Eingängen 2 derselben Registerstufen. Der Ausgang von NOR-Glied 614a ist über einen Inverter 615a mit Eingang 1 und 2 von Registerstufe 616a und mit Eingang 1 von Registerstufe 616b verbunden. Derselbe Ausgang des NOR-Glieds 614a ist direkt mit Eingang 2 von Registerstufe 616b verbunden.

Der Ausgang von NOR-Glied 614b ist direkt mit Eingang 2 von Register 616d verbunden und über einen Inverter 615b mit Eingang 1 derselben Stufe, sowie mit den Eingängen 1 und 2 der Stufe 616c. In gleicher Weise ist der Ausgang von NOR-Glied 614c mit den Eingängen der Stufen 616e und f verbunden. Der Ausgang des NOR-Gliedes 614d ist direkt mit den Eingängen 2 der Stufen 616g und h verbunden und über einen Inverter 615d mit den Eingängen 1 derselben Registerstufen. In gleicher Weise sind die Ausgänge der NOR-Glieder 614e und f mit den Eingängen der Registerstufen 616i und j bzw. 616k und l verbunden.

Der Ausgang des NOR-Gliedes 601 ist ausserdem über einen Inverter 605 mit je einem Eingang der NOR-Glieder 617 und 618 verbunden, sowie mit den Wortauswahleingängen WS der Registerstufen 616a bis f. Der zweite Eingang des NOR-Glieds 617 ist mit dem Adressbit A7 verbunden. Der Ausgang des NOR-Glieds 617 ist mit den Wortauswahleingängen der Registerstufen 616g, i, k und m verbunden, sowie mit dem zweiten Eingang des NOR-Glieds 618. Der Ausgang des NOR-Glieds 618 ist mit den Wortauswahleingängen WS der Registerstufen 616h, j, l und n verbunden.

Die Wirkungsweise der Adressumsetzschaltung in Fig. 6 wird nun für die drei Fälle beschrieben, in denen verschiedene Adressquellen vorliegen. Bei einer Zugriffsanforderung durch die Steuereinheit für den Bildschirm oder durch den Rechner (d.h. S1 = 1 bzw. S1 = 0, S2 = 1) hat das Ausgangssignal des NOR-Gliedes 601 den Pegel H (Wert 0) und bereitet so die NOR-Glieder 604 zum Durchschalten vor. Die Adresssignale A7 bis A9 durchlaufen dann auf ihrem Weg bis zu den Registern 616 immer eine gerade Anzahl von Inverterstufen, so dass die Moduladressen $SAR_i$ den angelegten Adresssignalen $A_i$ gleich sind. Beispielsweise durchläuft das Adresssignal A7 ausser dem NOR-Glied 604c das NOR-Glied 614f, bevor es dem Eingang 2 der Registerstufe 616k und l zugeführt wird. Diese Eingänge werden ausgewählt, da die Leitungen 621 und 622 in diesem Fall beide den Pegel H aufweisen. Deshalb erscheint in den Registerstufen 616k und l der Ausgangswert A7 und somit auch auf den Leitungen zu den Moduln 2 und 6.

In entsprechender Weise durchläuft das Adressbit A9 die Inverter 602a, NOR-Glied 604a, NOR-Glied 614a und Inverter 615a. Leitung 619 weist Pegel L auf, so dass in den Registerstufen 616a und b die Eingänge 1 ausgewählt werden, die mit den Inverterstufen 615 verbunden sind.

Die eigentliche zweidimensionale Adressumsetzung erfolgt im Schaltkreis nach Fig. 6, wenn ein Zugriffswunsch des Blockgenerators vorliegt. In diesem Fall hat das Ausgangssignal des NOR-Glieds 601 den Pegel L (Wert 1), so dass Decoder 603 aktiviert wird, die NOR-Glieder 604 dagegen gesperrt. Inverter 605 erzeugt am Eingang des NOR-Glieds 617 einen Pegel H. Derselbe Pegel liegt auch am Eingang WS der Registerstufen 616a bis f und aktiviert deren zweiten Eingang. Das Ausgangssignal des NOR-Glieds 617 hat den Pegel H, wenn Eingangsbit A7 den Pegel L aufweist. In diesem Fall werden die Eingangssignale 2 der Registerstufen 616g, i, k, m aktiviert. Hat Eingangsbit A7 den Pegel H, so aktiviert das Ausgangssignal von NOR-Glied 617 zusammen mit dem Signal des Inverters 605 das Ausgangssignal mit Pegel L des NOR-Glieds 618 und aktiviert dadurch das Eingangssignal 1 der Registerstufen 616h, j, l, n.

Die Erzeugung der Ausgangsadressbits SAR mit der Schaltung nach Fig. 6 sei nun anhand einiger Eingangskombinationen A8, A9 beschrieben. Haben diese beiden Bits den logischen Wert Null (d.h. den Pegelwert H), so wird keines der Ausgangssignale Y0 bis Y2 aktiviert, alle diese Ausgangsleitungen weisen also den Pegel H auf. Die NOR-Glieder 614 haben an ihrem Ausgang somit alle den Pegel L. Das Eingangssignal am Eingang 2 von Register 616a (der durch Leitung 619 aktiviert ist) liegt somit auf Pegel H, am Eingang 2 von Register 616b auf Pegel L. Damit empfangen die Module 0, 2, 4, 6 ein Adressbit SAR9 mit Pegel H entsprechend dem logischen Wert Null; die Module 1, 3, 5, 7 empfangen aus Registerstufe 616b den Pegel L entsprechend dem logischen Wert 1. Damit ist genau die erste Zeile von Block 53 erzeugt, die dieser Adresskombination A7–A9 entspricht.

Bei derselben Eingangskombination A8, A9 = 0,0 gelangen zu den Eingängen 2 der Registerstufen 616c, e die Pegel H, und zu den Stufen 616d, f die Pegel L. Die Module 0,4 werden somit mit einem Adressbit SAR8 mit dem logischen Wert Null beaufschlagt, die Module 2 und 6 mit dem logischen Wert 1, die Module 1 und 5 wieder mit dem logischen Wert Null und die Module 3 und 7 mit dem logischen Wert 1. Dies entspricht der ersten Zeile von Block 52.

Die Registergruppe R3 liefert bei der Eingangskombination A8, A9 verschiedene Ausgangssignale, je nachdem, welchen Wert das Eingangsbit A7 aufweist. Für das Eingangssignal A7 = 0 (Pegel H) wird in Registerstufe 616g durch Leitung 621 der Eingang WS 1 ausgewählt, auf dem durch Inverter 615d ein Pegel H erzeugt wird. Zum Modul 0 gelangt also das hochstellige Adressbit SAR7 mit dem Wert Null. Entsprechend erhält Modul 4 aus Registerstufe 616h direkt das Ausgangssignal von NOR-Glied 614d am Eingang 2 (der über den Pegel L auf Leitung 622 ausgewählt wird). Am Modul 4 erscheint somit das Adressbit SAR7 mit dem logischen Wert 1. In entsprechender Weise gelangen zu den Moduln 1, 2 und 3 für diese Eingangsadresse die Adressbits SAR7 mit dem logischen Wert Null, zu den Modulen 5, 6, 7 die Adressbits SAR7 mit dem Wert 1. Damit ist für die Eingangsadresse A7–A9 = 000 die erste Zeile von Block 51 erzeugt und in den Registern 616g bis n gespeichert. Ändert Bit A7 seinen Wert, so vertauschen sich die Pegel der Leitungen 621 und 622, so dass jeweils der andere Eingang der Registerstufen 616g bis n ausgewählt wird. In den Registern sind dann die zu den im vorherigen Beispiel erwähnten komplementären Werte gespeichert.

Liegen andere Adressen als (dezimal) Null oder 4 an, so aktiviert Decoder 603 eine seiner Ausgangsleitungen. Die jeweils angesteuerten NOR-Glieder 614 erzeugen dann einen Ausgangspegel H, der in analoger Weise direkt oder nach Inversion an die Registerstufen 616 abgegeben wird. Die einzelnen Zeilen der in Fig. 5B dargestellten Blöcke 51–53 lassen sich somit als Ausgangssignale der Registergruppen R1 bis R3 darstellen.

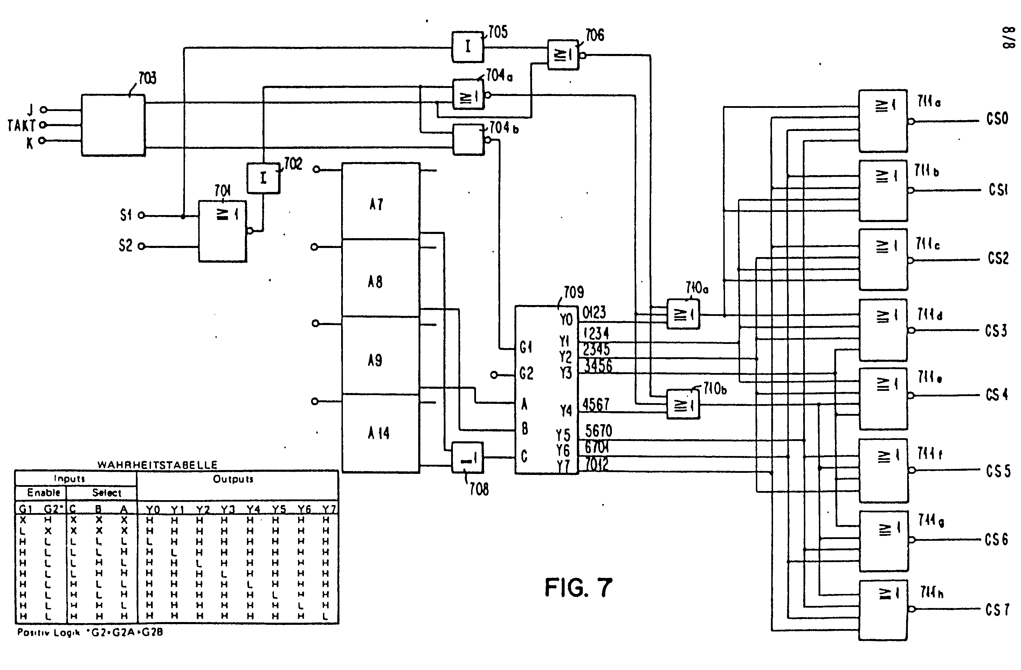

Fig. 7 zeigt Einzelheiten der Schaltung 43 zur Auswahl verschiedener Speichermoduln, abhängig von der Einheit, die gerade einen Zugriff zum Speicher verlangt. Diese Schaltung enthält einen Decodierer 709, der 3 Eingangssignalen A, B, C 8 Ausgangssignale Y0–Y7 zuordnet. Die Wahrheitstabelle dieses Decodierers ist in der Zeichnung angegeben. Derartige Schaltkreise können beispielsweise von der Firma Texas Instruments unter der Bezeichnung SN 54 LS 138 bezogen werden. Die Schaltung nach Fig. 7 arbeitet wie die nach Fig. 6 mit negativer Logik (Pegel H = logischer Wert 0). Als Eingangssignale werden diesem Decodierer hier die Adressbits A8 und A9 aus einem Register 707 zugeführt, sowie das Ausgangssignal eines Exklusiv ODER-Glieds 708, in dem die Adressbits A7 und A14 verknüpft werden. Die 8 Ausgangsleitungen des Decodierers 709 werden jeweils 4 von 8 NOR-Gliedern 711 zugeführt, deren Ausgang das Auswahlsignal CS für je einen Speichermodul darstellt. Die Verbindungen jeder Ausgangsleitung mit den jeweiligen NOR-Gliedern werden durch Tabelle 1 bestimmt. Bei-

spielsweise ist die Ausgangsleitung Y0 mit den NOR-Gliedern 711a, b, c und d verknüpft, deren Ausgangsleitungen wiederum die Speicherauswahlsignale für die Module 0, 1, 2, 3 sind. Der Decodierer bewirkt also eine Auswahl von je 4 Modulen aus der Gesamtzahl der 8 Speichermodule und zwar so, dass die Vierergruppe bei sich ändernden Eingangsadressen A7 bis A9 zyklisch in der Reihenfolge 1 bis 8 vertauscht wird; die jeweilige Modulauswahl ist in Fig. 7 an den Ausgangsleitungen Y0–Y7 vermerkt.

Bei Zugriffen des Blockgenerators oder der Steuereinheit für den Bildschirm werden alle 8 Moduln aktiviert; dies erfolgt mit Hilfe von ODER-Gliedern 710a, b, die in die Ausgangsleitungen Y0 und Y4 des Decodierers eingeschaltet sind und jeweils 4 NOR-Glieder 711 aktivieren.

Die Aktivierung des Decodierers und der ODER-Glieder 710 erfolgt mit Hilfe der bekannten Signale S1 und S2. Diese werden einem NOR-Glied 701 zugeführt, dessen Ausgangssignal über einen Inverter 702 zu den Eingängen eines NOR-Glieds 704a und eines NAND-Gliedes 704b gelangt. Die anderen beiden Eingänge dieser Glieder sind mit dem positiven bzw. dem negativen Ausgang eines Takt-Flip-Flops 703 verbunden. Der Ausgang von NAND-Glied 704b aktiviert den Decodierer 709, wenn an dessen Eingang $G_1$ ein Pegel H erscheint; dies ist der Fall bei der Kombination S1 = H, S2 = L. Die ODER-Glieder 710 werden beide gesetzt, wenn entweder der Blockgenerator oder das Steuergerät einen Zugriff erfordern (Code $S_1S_2 = 00$ bzw. S1 = 1).

Bei der oben beschriebenen Adressumsetzung werden die einzelnen Blöcke im Speicher nicht in ihrer natürlichen Reihenfolge abgelegt. Vor dem Einschreiben und nach dem Auslesen muss deshalb in der Datenvorbereitungseinheit 11 des Speichersystems 10 eine Rechts- oder Linksverschiebung der Daten erfolgen. Das Ausmass der Verschiebung richtet sich nach dem Wert der anliegenden Adressbits A7–A9 und der Einheit, die einen Speicherzugriff anfordert. In Fig. 8 sind die notwendigen Schiebeoperationen dargestellt. Handelt es sich beispielsweise um eine Einschreibanforderung des Blockgenerators mit der Adresse A7 A8 A9 = 011, so muss vor der Speicheroperation eine Linksverschiebung um drei Stellen erfolgen.

Die übrigen Elemente der Einrichtung zur graphischen Informationsverarbeitung brauchen nicht näher beschrieben zu werden, da sie ohne weiteres in Bauelementen aufgebaut werden können, die im Stand der Technik verfügbar sind. Beispielsweise verhält sich das Steuergerät für den Bildschirm ähnlich wie ein Integrierter Schaltkreis MC 6845 «CRT Controller» der Firma Motorola.

Anstelle des Vektorgenerators 1 können auch graphische Prozessoren mit weitergehenden Funktionen eingebaut werden; derartige höhere graphische Funktionen können weiterhin von dem angeschlossenen Rechner 7 wahrgenommen werden.

## Patentansprüche

1. Einrichtung zur Speicherung und Darstellung graphischer Information mit einem Rasteranzeigegegerät (23) und mit einer Speichereinheit (10), die mehrere Speichermoduln (16) zur verschränkten Speicherung von Datenelementen mit aufsteigenden Speicheradressen enthält und bei der die in gleichen Zeilen aller Moduln enthaltenen Daten einen Ausschnitt einer auf dem Rasteranzeigegerät anzuzeigenden Zeile ergeben, wobei senkrecht übereinander angezeigte Zeilenabschnitte in verschiedenen Speichermoduln abgelegt sind, dadurch gekennzeichnet, dass zum gleichzeitigen Zugriff zu zeilen- oder matrixförmigen Bildausschnitten alle oder ausgewählte Speichermoduln mit Speicheradressen beaufschlagt werden, die in einer Adressierungsschaltung (42) aus der Adresse des gewünschten Bildausschnitts und seiner Identifizierung (z. B. Matrix; Zeilenausschnitt) erzeugt werden und dass die einzuschreibenden oder auszulesenden Daten der zeilen- oder matrixförmigen Bildausschnitte abhängig von der Adresse des Bildausschnitts in einer Datenvorbereitungseinheit (11) zyklisch verschoben werden.

2. Einrichtung nach Anspruch 1, dadurch gekennzeichnet, dass ein oder mehrere Speichersegmente (14a, b) mit jeweils acht Speichermoduln vorgesehen sind und dass die auszuwählende Adresse (SAR5, SAR6, SAR7) innerhalb eines Moduls mit Adresse (K0, K1, K2) aus Teilen der angelegten Speicheradresse (A7, A8, A9) nach folgender binärer Gleichung bestimmt wird:

$$
\begin{array}{cccc}
 & \overline{A7} & \overline{A8} & \overline{A9} \\
+ & K0 & K1 & K2 \\
+ & 0 & 0 & 1 \\
\hline
 & (SAR5 & SAR6 & SAR7)\ \text{modulo}\ 8
\end{array}
$$

3. Einrichtung nach Anspruch 2, dadurch gekennzeichnet, dass eine Adresserzeugungsschaltung (42) mit folgenden Bestandteilen vorgesehen ist:
– in Gruppen (R1, R2, R3) zusammengefasste Registerstufen (616), deren einzelne Ausgangssignale jeweils ein Bit der Adresse innerhalb eines Moduls darstellen, wobei Adressbits gleicher Wertigkeit einer Registergruppe zugeordnet sind,
– einen Decodierer (603), dessen Ausgangssignale für solche Kombinationen des zugeführten Teils (A8, A9) der Speicheradresse aktiv werden, die eine gemeinsame Erzeugung von Adressbits (SAR) erlauben,
– Verbindungsleitungen zwischen dem Ausgang des Decodierers (603) und den Eingängen der Registerstufen mit zwischengeschalteten logischen Verknüpfungsgliedern (614) und Invertern (615) zur Realisierung der logischen Gleichung nach Anspruch 2.

4. Einrichtung nach Anspruch 3, dadurch gekennzeichnet, dass weitere Verbindungsleitungen (609 bis 611) mit zugeordneten logischen Verknüpfungsgliedern (604, 614, 615) vorgesehen sind, mit denen der angelegte Teil (A7, A8, A9) der Speicheradresse unverändert an die Registerstufen (616) durchgeschaltet werden kann.

5. Einrichtung nach einem der Ansprüche 2 bis 4, dadurch gekennzeichnet, dass eine Schaltung (43) zur Auswahl einzelner Moduln vorgesehen ist.

6. Einrichtung nach Anspruch 5, dadurch gekennzeichnet, dass die Schaltung zur Modulauswahl einen Decodierer (710) enthält, dem Teile der Speicheradresse (A7, A8) direkt zugeführt werden und weitere Teile (A9, A14) nach logischer Verknüpfung (im Exklusiv-ODER-Glied 708), und dessen Ausgangssignale (Y0 bis Y7) jeweils vier Registerstufen von insgesamt acht Registerstufen so auswählen, dass bei aufsteigend angelegten Speicheradressen eine zyklische Vertauschung der ausgewählten Registerstufen erfolgt.

7. Adressumsetzeinrichtung nach einem der Ansprüche 2 bis 6, dadurch gekennzeichnet, dass ein Register (41) vorgesehen ist, mit dem die nicht veränderten Teile (A0–A6, A10–A12) der angelegten Speicheradresse an die Moduln durchgeschaltet werden.

8. Einrichtung nach einem der Ansprüche 1 bis 7, dadurch gekennzeichnet, dass der Speichereinheit (10) ein Vektorgenerator (1) über einen Pufferspeicher (4) vorgeschaltet ist, der zwei abwechselnd betriebene Speicherbereiche (6a, 6b) mit einer Kapazität aufweist, die einem matrixförmigen Ausschnitt des Bildfelds (Block 3a, 3b) entspricht.

9. Einrichtung nach einem der Ansprüche 1 bis 8, dadurch gekennzeichnet, dass die Speichereinheit (10) mit einem Rechner (7) verbunden ist, der zeilenförmige Ausschnitte des Bildfeldes liefert.

10. Einrichtung nach einem der Ansprüche 1 bis 9, dadurch gekennzeichnet, dass die Speichereinheit (10) eine Einheit (13) zur Datenmodifizierung enthält, die unter Steuerung externer Signale (19) einen Teil oder die Gesamtheit der in den Speicher einzuschreibenden Daten ändert.

11. Einrichtung nach einem der Ansprüche 1 bis 10, dadurch gekennzeichnet, dass die gerade aktive Adressquelle (Blockgenerator, Rechner, Steuergerät für Bildschirm) die Zugriffsart bestimmt.

12. Einrichtung nach Anspruch 11, dadurch gekennzeichnet, dass bei Einschreibanforderungen für Blöcke eine Adressumsetzung für die einzelnen Speichermoduln erfolgt und dass bei Einschreibanforderungen für Zeilen eine Datenausrichtung (in Einheit 11) erfolgt, wenn die Zeile zur Speicherung nicht alle Moduln erfordert.

## Claims

1. Device for storing and displaying graphic information with a raster display device (25) and with a storage unit (10) comprising several storage modules (16) for the interleaved storing of data elements with ascending storage addresses, and where the data comprised in the same rows of all modules represent a sector of a row to be displayed on a raster display unit, row sectors displayed perpendicularly one over the other being stored in different storage modules, characterized in that for the simultaneous access to row- or matrix-shaped image sectors all, or selected storage modules are supplied with storage addresses generated in an addressing circuitry (42) out of the adress of the respective image sector and its identification (e.g. matrix; row sector), and that the data to be written in or read out of the row- or matrix-shaped image sectors are cyclically shifted depending on the adress of the image sector in a data preparation unit (11).

2. Device as claimed in claim 1, characterized in that one or several storage segments (14a, b) with eight storage modules each are provided, and that the adress (SAR5, SAR6, SAR7) to be selected is determined within a module with adress (K0, K1, K2) of parts of the applied storage adress (A7, A8, A9) in accordance with the following binary equation:

$$
\begin{array}{cccc}
  & \overline{A7} & \overline{A8} & \overline{A9} \\
+ & K0 & K1 & K2 \\
+ & 0 & 0 & 1 \\
\hline
  & (SAR5 & SAR6 & SAR7) \text{ modulo } 8
\end{array}
$$

3. Device as claimed in claim 2, characterized in that an adress generating circuit (42) comprising the following parts is provided:
- register stages (616) assembled in groups (R1, R2, R3) whose individual output signals each represent a bit of the address within a module, address bits of the same order being associated to a register group,
- a decoder (603) whose output signals are active for those combinations of the applied part (A8, A9) of the storage address which permit a joint production of address bits (SAR),
- connecting lines between the output of the decoder (603) and the inputs of the register stages comprising logic gates (614) and inverters (615) for realizing the logic equation in accordance with claim 2.

4. Device as claimed in claim 3, characterized in that further connecting lines (609 to 611) with associated logic gates (604, 614, 615) are provided with which the applied part (A7, A8, A9) of the storage address can be gated to the register stages (616) without alteration.

5. Device as claimed in one of claims 2 to 4, characterized in that a circuit (43) is provided for selecting individual modules.

6. Device as claimed in claim 5, characterized in that a circuit for module selection contains a decoder (710) to which parts of the storage address (A7, A8) are applied directly, and further parts (A9, A14) after EXCLUSIVE-ORing (in EXCLUSIVE-OR GATE 708), and whose output signals (Y0 to Y7) select four respective register stages of a total of eight register stages in such a way that with storage addresses being applied in increasing order there is a cyclic permutation of the selected register stages.

7. Address conversion device as claimed in one of claims 2 to 6, characterized in that a register (41) is provided with which the unchanged parts

(A0 to A6, A10 to A12) of the storage addresses applied are switched on to the modules.

8. Device as claimed in one of claims 1 to 7, characterized in that the storage unit (10) is preceded by a vector generator (1) and a buffer storage (4), the latter showing two alternately operated storage areas (6a, 6b) with a capacity corresponding to a matrix-shaped sector of the image field (block 3a, 3b).

9. Device as claimed in one of claims 1 to 8, characterized in that the storage unit (10) is connected to a computer (7) supplying row-shaped sectors of the image field.

10. Device as claimed in one of claims 1 to 9, characterized in that the storage unit (10) contains a unit (13) for data modification which with external signal (19) control alters some or all of the data to be stored in the storage.

11. Device as claimed in one of claims 1 to 10, characterized in that the currently active address source (block generator, computer, control device for screen) determines the kind of access.

12. Device as claimed in claim 11, characterized in that upon the store request for blocks there is an address conversion for the individual storage modules, and that upon store requests for rows there is a data alignment (in unit 11) when the row does not require all modules for storing.

**Revendications**

1. Dispositif de mémorisation et d'affichage d'informations graphiques comportant un appareil d'affichage à trame (23) et une unité de mémorisation (10), qui contient plusieurs modules de mémoire (16) pour une mémorisation croisée d'éléments de données avec des adresses croissantes en mémoire et dans lequel les données contenues dans des lignes identiques de tous les modules définissent une partie d'une ligne à représenter sur l'appareil d'affichage à trame, des parties de lignes affichées verticalement l'une au-dessus de l'autre étant placées dans différents modules de mémoire, caractérisé en ce que, en vue d'un accès simultané à des parties d'image en forme de lignes ou de matrices, la totalité ou bien des modules de mémoire sélectionnés sont sollicités par des adresses de mémoire qui sont produites dans un circuit d'adressage (42) à partir de l'adresse de la partie d'image désirée et de son identification (par exemple une matrice, une partie de ligne) et en ce que les données à écrire ou à lire pour les parties d'image en forme de lignes ou de matrices sont décalées cycliquement en fonction de l'adresse de la partie d'image dans une unité de préparation de données (11).

2. Dispositif selon la revendication 1, caractérisé en ce qu'il est prévu un ou plusieurs segments de mémoire (14a, b) comportant chacun huit modules de mémoire, et en ce que l'adresse à sélectionner (SAR5, SAR6, SAR7) à l'intérieur d'un module ayant une adresse (K0, K1, K2) est déterminée à partir de l'adresse de mémoire appliquée (A7, A8, A9) conformément à l'équation binaire suivante:

| $\overline{A7}$ | $\overline{A8}$ | $\overline{A9}$ |
|---|---|---|
| + K0 | K1 | K2 |
| + 0 | 0 | 1 |

(SAR 5 SAR6 SAR7) modulo 8

3. Dispositif selon la revendication 2, caractérisé en ce qu'il est prévu un circuit de production d'adresses (42) comportant les composants suivants:
– des étages de registres (616) réunis en groupes (R1, R2, R3), dont les différents signaux de sortie représentent chacun un bit de l'adresse à l'intérieur d'un module, auquel cas des bits d'adresses de même valeur sont associés à un groupe de registres,
– un décodeur (603) dont les signaux de sortie sont actifs pour des combinaisons de la partie introduite (A8, A9) de l'adresse de mémoire qui permettent une production commune de bits d'adresses (SAR),
– des conducteurs de liaison entre la sortie du décodeur (603) et les entrées des étages de registres, avec des organes de combinaison logique (614) et des inverseurs (615) branchés dans des positions intermédiaires pour résoudre l'équation logique de la revendication 2.

4. Dispositif selon la revendication 3, caractérisé en ce qu'il est prévu d'autres conducteurs de liaison (609 à 611) comportant des organes de combinaison logique (604, 614, 615) associés au moyen desquels la partie appliquée (A7, A8, A9) de l'adresse de mémoire peut être transmise sans modification aux étages de registres (616).

5. Dispositif selon l'une des revendications 2 à 4, caractérisé en ce qu'il est prévu un circuit (43) pour sélectionner des modules individuels.

6. Dispositif selon la revendication 5, caractérisé en ce que le circuit de sélection de module contient un décodeur (710), auquel sont appliquées directement des parties de l'adresse de mémoire (A7, A8) ainsi que d'autres parties (A9, A14) après une combinaison logique (dans une porte OU-exclusif 708) et dont les signaux de sortie (Y0 à Y7) sélectionnent respectivement quatre étages de registres parmi un total de huit étages de registres de façon qu'il se produise, dans le cas d'une croissance des adresses de mémoire appliquées, une permutation cyclique des étages de registres sélectionnés.

7. Dispositif de conversion d'adresses selon l'une quelconque des revendications 2 à 6, caractérisé en ce qu'il est prévu un registre (41) à l'aide duquel les parties non modifiées (A0–A6, A10–A12) de l'adresse de mémoire appliquée sont transférées dans les modules.

8. Dispositif selon l'une quelconque des revendications 1 à 7, caractérisé en ce qu'il est prévu en amont de l'unité de mémorisation (10) un générateur de vecteurs (1) par l'intermédiaire d'une mémoire tampon (4), qui comporte deux zones de mémorisation (6a, 6b) opérant alternativement et possédant une capacité qui correspond à une partie en forme de matrice du champ-image (bloc 3a, 3b).

9. Dispositif selon l'une quelconque des revendications 1 à 8, caractérisé en ce que l'unité de mémorisation (10) est reliée à un calculateur (7) qui fournit des parties en forme de lignes du champ-image.

10. Dispositif selon l'une quelconque des revendications 1 à 9, caractérisé en ce que l'unité de mémorisation (10) contient une unité (13) de modification de données, qui, sous la commande de signaux externes (19) modifie une partie ou la totalité des données à écrire dans la mémoire.

11. Dispositif selon l'une quelconque des revendications 1 à 10, caractérisé en ce que la source d'adresse présentement active (générateur de blocs, calculateur, appareil de commande d'un écran-image) détermine le mode d'accès.

12. Dispositif selon la revendication 11, caractérisé en ce que, lors de demandes d'écriture de blocs, une conversion d'adresses est effectuée pour les différents modules de mémoire, et en ce que, lors de demandes d'écriture de lignes, une distribution des données (dans l'unité 11) est effectuée lorsque la ligne ne nécéssite pas tous les modules pour une mémorisation.

FIG. 1

# FIG. 2 A

## FIG. 2B

0 038 411

**FIG.3**

**FIG.8**   SCHIEBEOPERATIONEN ZUM AUSRICHTEN DER DATEN

| ADRESS BUS-BIT A7 A8 A9 | 8X8 BIT-BLÖCKE V. BLOCKGEN. | VOR DEM EINSCHREIBEN | | NACH DEM AUSLESEN | | |
|---|---|---|---|---|---|---|
| | | 32 BIT-SÄTZE VOM RECHNER A14-H | A14-L | 64-BIT-SÄTZE Z STEUERGERÄT F BILDSCHIRM | 32 BIT-SÄTZE ZUM RECHNER | |
| 0  0  0 | l 0 | r 4 | l 0 | r 2 | r 1 | l 3 |
| 0  0  1 | l 1 | r 3 | l 1 | r 3 | r 2 | l 2 |
| 0  1  0 | l 2 | r 2 | l 2 | l 4 | r 3 | l 1 |
| 0  1  1 | l 3 | r 1 | l 3 | l 3 | r 4 | l 0 |
| 1  0  0 | r 4 | l 0 | r 4 | l 2 | l 3 | r 1 |
| 1  0  1 | r 3 | l 1 | r 3 | l 1 | l 2 | r 2 |
| 1  1  0 | r 2 | l 2 | r 2 | r 0 | l 1 | r 3 |
| 1  1  1 | r 1 | l 3 | r 1 | r 1 | l 0 | r 4 |

l n  SCHIEBE NACH LINKS UM n STELLEN        r 0  ENTSPRICHT NOP

r n       "       "   RECHTS  "   "        "        l 0       "       "

21

FIG. 4

# FIG. 5A

| A7 A8 A9 | MODUL 0 | MODUL 1 | MODUL 2 | MODUL 3 | MODUL 4 | MODUL 5 | MODUL 6 | MODUL 7 |
|---|---|---|---|---|---|---|---|---|
| 0 0 0 | 000 | 001 | 010 | 011 | 100 | 101 | 110 | 111 |
| 0 0 1 | 111 | 000 | 001 | 010 | 011 | 100 | 101 | 110 |
| 0 1 0 | 110 | 111 | 000 | 001 | 010 | 011 | 100 | 101 |
| 0 1 1 | 101 | 110 | 111 | 000 | 001 | 010 | 011 | 100 |
| 1 0 0 | 100 | 101 | 110 | 111 | 000 | 001 | 010 | 011 |
| 1 0 1 | 011 | 100 | 101 | 110 | 111 | 000 | 001 | 010 |
| 1 1 0 | 010 | 011 | 100 | 101 | 110 | 111 | 000 | 001 |
| 1 1 1 | 001 | 010 | 011 | 100 | 101 | 110 | 111 | 000 |

S S S
A A A
R R R
5 6 7

# FIG. 5B

SAR 5

| A7 A8 A9 | MODUL: 0 | 1 | 2 | 3 | 4 | 5 | 6 | 7 |
|---|---|---|---|---|---|---|---|---|
| 0 0 0 | 0 | 0 | 0 | 0 | 1 | 1 | 1 | 1 |
| 0 0 1 | 1 | 0 | 0 | 0 | 0 | 1 | 1 | 1 |
| 0 1 0 | 1 | 1 | 0 | 0 | 0 | 0 | 1 | 1 |
| 0 1 1 | 1 | 1 | 1 | 0 | 0 | 0 | 0 | 1 |
| 1 0 0 | 1 | 1 | 1 | 1 | 0 | 0 | 0 | 0 |
| 1 0 1 | 0 | 1 | 1 | 1 | 1 | 0 | 0 | 0 |
| 1 1 0 | 0 | 0 | 1 | 1 | 1 | 1 | 0 | 0 |
| 1 1 1 | 0 | 0 | 0 | 1 | 1 | 1 | 1 | 0 |

51

SAR 6

| 0 | 1 | 2 | 3 | 4 | 5 | 6 | 7 |
|---|---|---|---|---|---|---|---|
| 0 | 0 | 1 | 1 | 0 | 0 | 1 | 1 |
| 1 | 0 | 0 | 1 | 1 | 0 | 0 | 1 |
| 1 | 1 | 0 | 0 | 1 | 1 | 0 | 0 |
| 0 | 1 | 1 | 0 | 0 | 1 | 1 | 0 |
| 0 | 0 | 1 | 1 | 0 | 0 | 1 | 1 |
| 1 | 0 | 0 | 1 | 1 | 0 | 0 | 1 |
| 1 | 1 | 0 | 0 | 1 | 1 | 0 | 0 |
| 0 | 1 | 1 | 0 | 0 | 1 | 1 | 0 |

52

SAR 7

| 0 | 1 | 2 | 3 | 4 | 5 | 6 | 7 |
|---|---|---|---|---|---|---|---|
| 0 | 1 | 0 | 1 | 0 | 1 | 0 | 1 |
| 1 | 0 | 1 | 0 | 1 | 0 | 1 | 0 |
| 0 | 1 | 0 | 1 | 0 | 1 | 0 | 1 |
| 1 | 0 | 1 | 0 | 1 | 0 | 1 | 0 |
| 0 | 1 | 0 | 1 | 0 | 1 | 0 | 1 |
| 1 | 0 | 1 | 0 | 1 | 0 | 1 | 0 |
| 0 | 1 | 0 | 1 | 0 | 1 | 0 | 1 |
| 1 | 0 | 1 | 0 | 1 | 0 | 1 | 0 |

53

25

FIG. 6

27

0 038 411

**FIG. 7**

J
TAKT
K

S1
S2

A7
A8
A9
A14

WAHRHEITSTABELLE

| Inputs | | | | Outputs | | | | | | | |
|--------|---|---|---|----|----|----|----|----|----|----|----|
| Enable | | Select | | | | | | | | | |
| G1 | G2* | C | B | A | Y0 | Y1 | Y2 | Y3 | Y4 | Y5 | Y6 | Y7 |
| X | H | X | X | X | H | H | H | H | H | H | H | H |
| L | X | X | X | X | H | H | H | H | H | H | H | H |
| H | L | L | L | L | L | H | H | H | H | H | H | H |
| H | L | L | L | H | H | L | H | H | H | H | H | H |
| H | L | L | H | L | H | H | L | H | H | H | H | H |
| H | L | L | H | H | H | H | H | L | H | H | H | H |
| H | L | H | L | L | H | H | H | H | L | H | H | H |
| H | L | H | L | H | H | H | H | H | H | L | H | H |
| H | L | H | H | L | H | H | H | H | H | H | L | H |
| H | L | H | H | H | H | H | H | H | H | H | H | L |

Positiv Logik *G2=G2A+G2B

CS0
CS1
CS2
CS3
CS4
CS5
CS6
CS7